# EUROPEAN PATENT APPLICATION

(11) **EP 2 302 206 A1**
(43) Date of publication of application: **30.03.2011**
(21) Application number: 09012114.6
(22) Date of filing: 23.09.2009
(51) Int. Cl.: F03D 7/00, F03D 7/02

(54) **Selecting a load reduction measure for operating a power generating machine**

(71) Applicant: Siemens Aktiengesellschaft, 80333 München (DE)
(72) Inventor: Egedal, Per, 7400 Herning (DK); Frydendal, Ib, 6683 Føvling (DK)

(57) **Abstract**

It is described a method for selecting a load reduction measure for operating a power generating machine (100), in particular a wind turbine (100). The method comprises (a) determining a mechanical load which is acting on a structural component (114, 120, 122) of the power generating machine (100), and (b) selecting the load reduction measure (258a, 258b, 258c, 258d, 258e) from at least two predetermined load reduction measures based on the determined mechanical load. It is further described a machine load control system (150, 250), the power generating machine (100) and a computer program, which are all adapted for carrying out and/or for controlling the above described operation control method.

## Description

### Field of invention

The present invention relates to the technical field of operating power generating machines such as wind turbines. In particular, the present invention relates to a method and to machine load control system for selecting a load reduction measure in order to yield a reduced power production of the power generating machine. Further, the present invention relates to a power generating machine such as a wind turbine and to a computer program, which are adapted for controlling or for carrying out the above mentioned load reduction measure selection method.

### Art Background

Rotor blades of wind turbine are exposed to large dynamic mechanical loads in particular when the wind turbine is operated in turbulent wind conditions or in conditions of flow distortion, e.g. high wind shear. Therefore, the rotor blades of wind turbine and the corresponding supporting structures have been dimensioned such as to be able to withstand all the dynamic loads that could occur under all conditions to which the wind turbine is certified.

However, in case of extreme wing conditions the wind load on the wind turbine must be reduced in order to avoid any damage of the wind turbine. An existing measure by which the wind load on wind turbine is reduced in high wind conditions is simply shutting down the wind turbine when the wind speed exceeds one or more threshold values. Thus a wind turbine is e.g. shut down, when the wind speed exceeds the value of about 25 m/s for about 10 minutes, when the wind speed exceeds the value of about 28 m/s for about 30 seconds or when the wind speed exceeds the value of about 32 m/s for about 1 second.

In recent years it has become clear that continuing the strategy of simply strengthening the mechanical structure of a wind turbine in a sufficient manner would lead to very heavy designs in particular for large wind turbines. Consequently, various methods have been developed for the active reduction of operational loads acting on structural components such as rotor blades.

EP 1 911 968 A1 discloses a control system for a wind turbine. The control system comprises (a) a sensor arrangement for capturing measures related to the turbine operation and fatigue accumulation, (b) an upper level controller, which, on the basis of a statistical treatment of said measures, calculates optimized control settings at discrete points of time, (c) a measurement module which processes said measures into instantaneous values, and (d) a lower level controller that receives said control settings and said instantaneous values and calculates instantaneous optimal commands to control turbine actuators. The lower level controller comprises a continuous-time damage model which calculates the rate at which damage is accumulated at any time, and an optimal controller which controls operational states of the turbine, either by directly feedbacking the instantaneous values to the actuators, or by generating a turbine performance objective function which is continuously optimized by repeatedly solving a receding horizon optimization problem.

EP 2 000 667 A1 discloses a control method for controlling load reduction for a wind turbine rotor with rotor blades comprising at least one aerodynamic active element responsive to a control signal for modifying its setting is provided. The method comprises the steps of (a) detecting the loads acting on the rotor blades in relation to the rotor's azimuth, (b) establishing individual control signals for modifying the settings of the aerodynamic active elements of the rotor blades based on a pitch angle control system and (c) providing the aerodynamic active elements with the individual control signals.

US 4,298,313 discloses a method for actively reducing the operational loads acting on rotor blades. The disclosed method is called cyclic blade pitch. In the cyclic blade pitch the blade pitch angle setting of each rotor blade is changed during each revolution.

EP 1 988 284 A1 discloses a method of operating a wind turbine, wherein for a reduction of a wind load impacting on the wind turbine the rotational speed of the rotor and/or the electrical power output of the wind turbine are reduced depending on a deviation of the wind speed from the average wind speed.

There may be a need for dynamically controlling the operation of a power generating machine in such a manner that mechanical overloads acting on a structural component of the power generating machine can be avoided.

### Summary of the Invention

This need may be met by the subject matter according to the independent claims. Advantageous embodiments of the present invention are described by the dependent claims.

According to a first aspect of the invention there is provided a method for selecting a load reduction measure for operating a power generating machine, in particular a wind turbine. The provided method comprises (a) determining a mechanical load which is acting on a structural component of the power generating machine, and (b) selecting the load reduction measure from at least two predetermined load reduction measures based on the determined mechanical load.

The described method is based on the idea that an appropriate load reduction measure can be selected based on a strategy, which relies at least on the measured mechanical load. Thereby, the selected load reduction measure can be taken from different possible and predetermined load reduction measures. There is no principal upper limit for the number of predetermined load reduction measures. Of course, the type or the nature of the load reduction measures depends on the type of power generating machine and/or on the type of structural component, which mechanical load is taken as an input value for the described selection procedure.

It is mentioned that in this document a load reduction measure is also referred to a load reduction tool.

When employing the described load reduction measure selection method for operating a power generating machine it may be possible to select an optimum load reduction tool in respect to the loads acting on the machine and/or on the specific structural components. Thereby it may be possible to choose a load reduction tool that optimizes the relationship between load reduction and power loss. In case of a wind turbine it may be for instance more beneficial to use a cyclic pitch scheme for the adjustment of the blade pitch angle of the rotor blades instead of reducing the rotor speed or even shutting down the wind turbine.

According to an embodiment of the invention for selecting the load reduction measure in addition to the determined mechanical load acting on the structural component at least one operational parameter of the power generating machine is taken into account.

Such a further operational parameter may be for instance (a) a current fatigue life time consumption of the structural component being spent for generating a predefined amount of energy, (b) an accumulated fatigue life time consumption of the structural component and/or (c) a remaining fatigue life time of the structural component. Thereby, the current fatigue life time consumption may be a fatigue life time which will have to be spent by the structural component in order that, under the current operating conditions, the power generating machine can produce a certain amount of energy.

The accumulated fatigue life time consumption may be a fatigue life time consumption, which during a previous operation of the power generating machine, has been consumed or exhausted by the structural component. Accordingly, the remaining fatigue life time is the fatigue life time which the structural component is able to consume before a damaging of the structural component is expected.

In this document the terms "current fatigue life time consumption", "accumulated fatigue life time consumption" and remaining "fatigue life time consumption" are related to the generally known term "fatigue life", which according to the American Society for Testing and Materials (ASTM) is defined as the number of stress cycles of a specified character that a structural component sustains before a failure of the structural component of a specified nature occurs. In this document the term "fatigue life" is also referred to as "fatigue life time".

The described operational parameter may by any parameter which may be relevant for operating the power generating machine in the future. In this respect the operational parameter may be for instance the current price which can be achieved for the generated power (power price).

With respect to a possible dependency of the operation strategy of the power generating machine from the current power price the following consideration might be taken into account. When the power price is comparatively low, it might be advantageous to strongly reduce the power generating rate in order to significantly reduce the mechanical loads on the structural component and thus save the fatigue life time consumption. By saving fatigue life time consumption, at a later time, when the power price has again increased, the power generating machine can be operated in a more aggressive way thus using a higher fatigue life time consumption rate.

In case of a wind turbine the operational parameter may also reflect environmental conditions of the wind turbine. Specifically, the operational parameter may be wind speed, the wind turbulences, the sunshine condition, the time of the year and/or the temperature. Generally speaking many different operational in order to operate the power generating machine in an optimum way.

Further, many different strategies could be used by a controller of the power generating machine. In case of a wind turbine the turbine load controller could use for instance a strategy where the operation of the wind turbine depends on the consumed fatigue life time of the structural component. It is hereby possible to operate the wind turbine is a conservative manner or a more aggressive manner depending on the calendar time and accumulated fatigue life time, which has been used so far.

According to a further embodiment of the invention determining the mechanical load acting on the structural component comprises determining a change of the mechanical load which is acting on the structural component. This may provide the advantage that the described method can quickly react on sudden changes of the mechanical load acting on the structural component. In other words, it may be even possible to use a derivative operational control for a fast control action e.g. to react on fast mechanical load changes. Thereby, the change of the mechanical load may be evaluated within a predetermined time duration. This means that the mechanical load change corresponds to a mechanical time rate of change.

According to a further embodiment of the invention selecting a further load reduction measure from at least three predetermined load reduction measures is based on the determined mechanical load.

Descriptive speaking, based on the determined mechanical load a combination of different load reduction measures can be selected for reducing the mechanical load of the structural component. This may provide the advantage that depending on the current operating conditions a tailor-made scenario for reducing the mechanical load can be activated.

According to a further embodiment of the invention (a) the mechanical load which is acting on the structural component is determined by a hard sensor and/or (b) the mechanical load which is acting on the structural component is determined by a soft sensor.

A hard sensor may be any measuring instrument being capable of detecting a physical parameter of the structural component during the operation of the power generating machine. The hard sensor may be for instance a force meter, a pressure gauge, a strain gauge such as for instance a tensometer, an acceleration sensor, a proximity gauge, a displacement sensor and/or a temperature sensor. Thereby, a temperature sensor or preferably two temperature sensors may be used to determine thermal fluctuations and/or thermal gradients, which, because of a typical thermal expansion of the material of the structural component, may also cause a stress induced mechanical load on the structural component.

A soft sensor, which is often also called a virtual sensor, is a common name for software where several measurements are processed together. There may be dozens or even hundreds of measurements. The interaction of the signals being provided by one or more hard sensors can be used for calculating new quantities that need not be measured. Soft sensors may be especially useful in data fusion, where measurements of different characteristics and dynamics are combined.

According to a further embodiment of the invention determining the mechanical load acting on the structural component comprises (a) checking a signal quality of a sensor output signal, which is indicative for the mechanical load acting on the structural component and (b) if the signal quality of the sensor output signal fulfills a predetermined signal quality requirement, using the sensor output signal for selecting the load reduction measure.

In other words, if the signal quality of the sensor output signal is not considered as to represent a reliable value for the mechanical load, the sensor output signal is rejected or discarded.

The described signal quality control may provide the advantage that measurement artifacts or apparent measurement errors can be filtered out. For example spikes may be removed from the output signal which spikes may be caused for instance by noise or a transient behavior during an initialization. Since a person skilled in the art will be aware of suitable quality requirements for the sake of conciseness no further details about a concrete realization of the described signal quality control are presented in this document.

The described signal quality control may for example check the signal quality by comparing different signal output signals being provided from different measurement sensors, which may be a hard sensor and/or a soft sensor. Thereafter, the best signal may be selected from different signal sources describing the mechanical load for the same structural component.

According to a further embodiment of the invention the method further comprises predicting a mechanical load condition of the structural component based on the determined mechanical load acting on the structural component. Thereby, for selecting the load reduction measure the predicted mechanical load condition of the structural component is taken into account. The prediction of the mechanical load condition can be carried out by a load condition prediction unit, which may receive a corresponding load signal from a signal quality checking unit performing a signal quality check as described above. Of course, the corresponding load signal can also be provided by appropriate load measurement sensors such as the above described hard sensor and/or the above described soft sensor.

The prediction of the mechanical load condition can comprise for instance setting a flag if a situation or condition is detected where there is certain risk for a particular high mechanical high. In case of a wind turbine this could be e.g. a detection of a rapid change in the wind direction and/or a signal provided from an up-wind turbine that a wind gust will come within some time such as for instance within the next 30s. In this respect an up-wind turbine is a certain wind turbine of a wind farm comprising a plurality of wind turbines, which is located upstream with respect to the current wind stream.

The prediction of the mechanical load condition could also be a detection of a deviation of a standard wind condition for instance by means of a certain wind signal. Such a deviation could for instance indicate a risk for an extreme wind gust, which, without appropriate counter measures for reducing the mechanical load on at least some structural components of the wind turbine, could cause damaging on the respective structural component.

According to a further embodiment of the invention the method further comprises detecting a load cycle of the structural component based on the determined mechanical load acting on the structural component. Thereby, for selecting the load reduction measure the detected load cycle of the structural component is taken into account.

The described load cycle detection may be carried out by a load cycle detection unit, which is capable of detecting the mechanical load cycle which is currently acting on the structural component. Thereby, a load cycle may be defined a time period spanning one at least intermediary peak load acting on the structural component. For then real life time of the structural component the number of load cycles, which may impact on the structural component without causing a failure, are an important parameter. Of course, also the strengths of the respective load cycles are highly relevant.

According to a further embodiment of the invention the method further comprises detecting a load cycle cumulation of the structural component based on the detected load cycle of the structural component. Thereby, for selecting the load reduction measure the detected load cycle cumulation of the structural component is taken into account.

This may provide the advantage that it is possible to operate the power generating machine based on instantaneous mechanical load conditions. This can be realized for instance with an Online Cyclic Counting Rate (OCCR) method, wherein a fatigue load acting on the structural component is continuously calculated and cumulated in order to yield a value being indicative for the cumulated life time consumption of the structural component. It is hereby possible to (online) control the power generating machine and to reduce the mechanical load in the same time the load is building up.

In the following 13 preferred embodiments for an OCCR method are described:
1) In general, the OCCR method may be used for determining an equivalent mechanical load of the structural component, which is subjected to a dynamic mechanical loading. The OCCR method may comprise (a) measuring a first measurement value of the mechanical load of the structural component and comparing the first measurement value with a first reference value, (b) first updating at least one count value representing the number of load half-cycles of the structural component based on the result of comparing, wherein the load half-cycles correspond to a predetermined range of mechanical loads and occur within a time period prior to the measurement of the first measurement value, and (c) determining a first equivalent mechanical load of the structural component based on the first updated count value.
2) The OCCR method may further comprise (a) updating the first reference value to a second reference value based on the result of comparing the first measurement value with the first reference value, (b) measuring a second measurement value of the mechanical load of the structural component, (c) comparing the second measurement value with the second reference value, (d) second updating the at least one count value representing the number of load half-cycles of the structural component based on the result of comparing the second measurement value with the second reference value, wherein the load half-cycles correspond to the predetermined range of mechanical loads and occur within a time period prior to the measurement of the second measurement value, and (e) determining a second updated equivalent mechanical load of the structural component based on the second updated count value.
3) First updating the at least one count value may comprise (a) increasing the at least one count value by one, if the first measurement value minus the first reference value is positive and falls within the predetermined range of mechanical loads, or (b) leaving the at least one count value unchanged, if the first measurement value minus the first reference value is positive and does not fall within the predetermined range of mechanical loads or if the first measurement value minus the first reference value is negative.
4) In case the at least one count value has been increased by one in course of the first updating, the second updating the at least one count value comprises (a) further increasing the at least one count value by one, if the second reference value minus the second measurement value is positive and falls within the predetermined range of mechanical loads, or (b) leaving the at least one count value unchanged, if the second reference value minus the second measurement value is positive and does not fall within the predetermined range of mechanical loads or if the first reference value minus the first measurement value is negative. Alternatively, in case the at least one count value has been left unchanged in course of the first updating, the second updating the at least one count value comprises (a) increasing the at least one count value by one, if the second measurement value minus the second reference value is positive and falls within the predetermined range of mechanical loads, or (b) further leaving the at least one count value unchanged, if the second measurement value minus the second reference value is positive and does not fall within the predetermined range of mechanical loads or if the second measurement value minus the second reference value is negative.
5) Updating the first reference value to the second reference value may comprise (a) setting the second reference value equal to the first measurement value, if the first measurement value minus the first reference value is positive and falls within the predetermined range of mechanical loads or if the first measurement value minus the first reference value is negative, or (b) setting the second reference value equal to the first reference value, if the first measurement value minus the first reference value is positive and does not fall within the predetermined range of mechanical loads.
6) First updating the at least one count value may comprise (a) increasing the at least one count value by one, if the first reference value minus the first measurement value is positive and falls within the predetermined range of mechanical loads, or (b) leaving the at least one count value unchanged, if the first reference value minus the first measurement value is positive and does not fall within the predetermined range of mechanical loads or if the first reference value minus the first measurement value is negative.
7) In case the at least one count value has been increased by one in course of the first updating, the second updating the at least one count value may comprise (a) further increasing the at least one count value by one, if the second measurement value minus the second reference value is positive and falls within the predetermined range of mechanical loads, or (b) leaving the at least one count value unchanged, if the second measurement value minus the second reference value is positive and does not fall within the predetermined range of mechanical loads or if the second measurement value minus the second reference value is negative. Alternatively, in case the at least one count value has been left unchanged in course of the first updating, the second updating the at least one count value may comprise (a) increasing the at least one count value by one, if the second reference value minus the second measurement value is positive and falls within the predetermined range of mechanical loads, or (b) further leaving the at least one count value unchanged, if the second reference value minus the second measurement value is positive and does not fall within the predetermined range of mechanical loads or if the second measurement value minus the second reference value is negative.
8) Updating the first reference value to the second reference value may comprise (a) setting the second reference value equal to the first measurement value, if the first reference value minus the first measurement value is positive and falls within the predetermined range of mechanical loads or if the first reference value minus the first measurement value is negative, or (b) setting the second reference value equal to the first reference value, if the first reference value minus the first measurement value is positive and does not fall within the predetermined range of mechanical loads.
9) At least one further count value may be associated with at least one further predetermined range of mechanical loads, the further predetermined range of mechanical loads comprising a lower bound which is higher than a lower bound of the predetermined range of mechanical loads. In this case the OCCR method may further comprise (a) further comparing the first measurement value with a further first reference value, (b) further first updating at least one further count value representing the number of further load half-cycles of the structural component based on the result of further comparing, wherein the further load half-cycles correspond to the further predetermined range of mechanical loads and occur within the time period prior to the measurement of the first measurement value, and (c) adapting the first updated count value, wherein determining the first equivalent mechanical load of the structural component is based on the adapted first updated count value and on the further first updated count value.
10) Adapting the first updated count value may comprise (a) decreasing the first updated count value by one, if the further first updating comprises increasing the at least one further count value and (b) leaving the first updated count value unchanged, if the further first updating comprises leaving the at least one further count value unchanged.
11) The OCCR method may further comprise (a) updating the further first reference value to a further second reference value based on the result of further comparing the first measurement value with the further first reference value, (b) further comparing the second measurement value with the further second reference value, (c) further second updating the at least one further count value representing the number of further load half-cycles of the structural component based on the result of comparing the second measurement value with the further second reference value, wherein the further load half-cycles correspond to the further predetermined range of mechanical loads and occur within a time period prior to the measurement of the second measurement value, and (d) adapting the second updated count value. Thereby, determining the second updated equivalent mechanical load of the structural component is based on the adapted second updated count value and the further second updated count value.
12) Adapting the second updated count value may comprise (a) decreasing the second updated count value by one, if the further second updating comprised increasing the at least one further count value and (b) leaving the second updated count value unchanged, if the further second updating comprised leaving the at least one further count value unchanged.
13) The OCCR method may further comprise triggering a signal indicating the first updated equivalent load and/or the second updated equivalent load exceeding a preset threshold value.

According to a further embodiment of the invention the power generating machine is a wind turbine and the predetermined load reduction measures comprise at least one of the following measures: (a) stopping the operation of the wind turbine for a predetermined period of time, (b) reducing the speed of the wind turbine, (c) reducing the power being generated by the wind turbine, (d) changing the blade pitch angle of at least one rotor blade of the wind turbine, (e) changing the yaw angle of a nacelle of the wind turbine.

Thereby, reducing speed of the wind turbine may particularly mean to reduce the rotational speed of the rotor of the wind turbine. Further, changing the blade pitch angle of at least one rotor blade of the wind turbine may comprise changing the blade pitch angle setting from an individual pitch to a cyclic pitch or vice versa.

In this respect the term "cyclic pitch" refers to a method wherein the blade pitch angle setting of each rotor blade is changed during each revolution. More details about "cyclic pitch" can be found for instance in the US patent US 4,298,313.

It is pointed out that the mentioned list of control measures is not exclusive. In order to change the current mechanical load of the structural component a suitable adaptation of any arbitrary parameter of the wind turbine may be carried out, wherein the parameter adaptation results in a change of the current power generation of the wind turbine.

According to a further aspect of the invention there is provided a machine load control system for selecting a load reduction measure for operating a power generating machine, in particular a wind turbine. The machine load control system comprises (a) determining unit for determining a mechanical load which is acting on a structural component of the power generating machine, and (b) a selection unit for selecting the load reduction measure from at least two predetermined load reduction measures based on the determined mechanical load.

Also the described machine load control system is based on the idea that an appropriate load reduction measure can be selected based on a strategy, which relies at least on the measured mechanical load. Thereby, the selected load reduction measure can be taken from different predetermined load reduction measures. Thereby, the type or the nature of the load reduction measures depends on the type of power generating machine and/or on the type of structural component, which is subjected to mechanical load representing an input value for the described selection procedure.

According to a further aspect of the invention there is provided a power generating machine, in particular a wind turbine. The provided power generating machine comprises a machine load control system as described above.

According to an embodiment of the invention the structural component is a force, a stress and/or a pressure receiving element of a wind turbine.

The structural component may be for instance a rotor blade, a tower or a nacelle. The structural component may further be a part of the rotor of the wind turbine. In particular the structural component may a hub representing the anchor point for the rotor blades at the main shaft of the rotor. Further, the structural component may be the main shaft, a main bearing for the main shaft or a bed plate of the main bearing. Furthermore, the structural component may be a yaw bearing of the nacelle. Last but not least the structural component may be the gear box of the wind turbine or the electric generator of the wind turbine which is connected with the gear box.

Taking at least one of the above described wind turbine components as the structural component may provide the advantage that the above described operation of the wind turbine can be optimized in order to realize an optimized fatigue life time consumption of those components of a wind turbine, which usually undergo the strongest mechanical loads /fatigue and which therefore limit the economic life-time or at least the maintenance interval of the wind turbine.

According to a further aspect of the invention there is provided a computer program for controlling the operation of a power generating machine, in particular for controlling the operation of a wind turbine, the computer program, when being executed by a data processor, is adapted for controlling any embodiment of the above described method for selecting a load reduction measure.

As used herein, reference to a computer program is intended to be equivalent to a reference to a program element and/or to a computer readable medium containing instructions for controlling a computer system to coordinate the performance of the above described method.

The computer program may be implemented as computer readable instruction code in any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

The invention may be realized by means of a computer program respectively software. However, the invention may also be realized by means of one or more specific electronic circuits respectively hardware. Furthermore, the invention may also be realized in a hybrid form, i.e. in a combination of software modules and hardware modules.

It has to be further noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this application.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Figure 1 shows a wind turbine according to an embodiment of the present invention.
Figure 2 shows in accordance with an embodiment of the present invention a block diagram of a wind turbine load control system.

### Detailed Description

The illustration in the drawing is schematically. It is noted that in different figures, similar or identical elements are provided with reference signs, which are different from the corresponding reference signs only within the first digit.

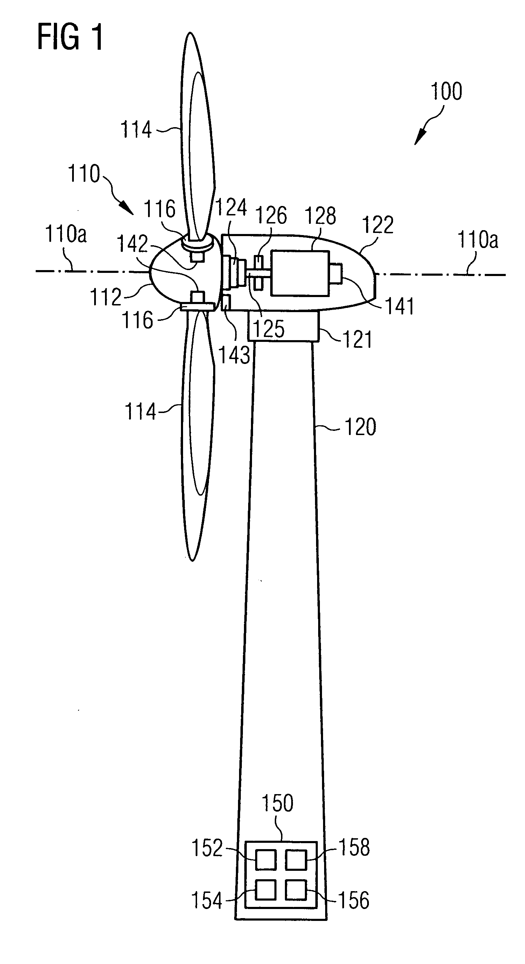

Figure 1 shows a wind turbine 100 according to an embodiment of the invention. The wind turbine 100 comprises a tower 120, which is mounted on a non-depicted fundament. On top of the tower 120 there is arranged a nacelle 122. In between the tower 120 and the nacelle 122 there is provided a yaw angle adjustment device 121, which is capable of rotating the nacelle 122 around a non depicted vertical axis, which is aligned with the longitudinal extension of the tower 120. By controlling the yaw angle adjustment device 121 in an appropriate manner it can be made sure, that during a normal operation of the wind turbine 100 the nacelle 122 is always properly aligned with the current wind direction. However, as will be described below in more detail, the yaw angle adjustment device 121 can be used to adjust the yaw angle to a position, wherein the nacelle is intentionally not perfectly aligned with the current wind direction.

The wind turbine 100 further comprises a rotor 110 having three blades 114. In the perspective of Figure 1 only two blades 114 are visible. The rotor 110 is rotatable around a rotational axis 110a. The blades 114, which are mounted at a driving collar 112, extend radial with respect to the rotational axis 110a.

In between the driving collar 112 and a blade 114 there is respectively provided a blade adjustment device 116 in order to adjust the blade pitch angle of each blade 114 by rotating the respective blade 114 around a non depicted axis being aligned parallel with the longitudinal extension of the blade 114. By controlling the blade adjustment device 116 the blade pitch angle of the respective blade 114 can be adjusted in such a manner that at least when the wind is not so strong a maximum wind power can be retrieved from the available wind power. However, as will be described below in more detail, the blade pitch angle can also be intentionally adjusted to a position, in which only a reduced wind power can be captured.

As can be seen from Figure 1, within the nacelle 122 there is provided a gear box 124. The gear box 124 is used to convert the number of revolutions of the rotor 110 into a higher number of revolutions of a shaft 125, which is coupled in a known manner to a generator 128. Further, a brake 126 is provided in order to stop the operation of the wind turbine 100 or to reduce the rotational speed of the rotor 110 for instance (a) in case of an emergency, (b) in case of too strong wind conditions, which might harm the wind turbine 100, and/or (c) in case of an intentional saving of structural fatigue life of at least one component of the wind turbine 100.

The wind turbine 100 further comprises a control system 150 for operating the wind turbine 100 in a highly efficient manner. Apart from controlling for instance the yaw angle adjustment device 121 the depicted control system 150 is also used for adjusting the blade pitch angle of the rotor blades 114 in an optimized manner. Further, as will be described below in more detail, the control system 150 is used for adjusting the yaw angle of the nacelle 122 respectively of the rotor 110.

For controlling the operation of the wind turbine the control system 150 is connected to a rotational speed sensor 143, which is connected to the gear box 124. The rotational speed sensor 143 feeds a signal to the control system 150, which is indicative for the current rotational speed of the rotor 110.

Further, the control system 150 is connected to a power sensor 141 being connected to the generator 128. The power sensor 141 provides information about the current power production of the wind turbine 110.

Furthermore, the control system 150 is connected to angle sensors 142, which, according to the embodiment described here, are connected to the respective blade adjustment device 116. Therefore, the control system 150 always has a precise knowledge about the actual blade pitch angle settings of all rotor blades 114.

According to the embodiment described here the control system 150 is also used for selecting a load reduction measure for operating the wind turbine 100 in such a manner, that (a) a reduced amount of power is generated and (b) the mechanical load on a structural component of the wind turbine is reduced. According to the embodiment described here the structural component is at least one of the rotor blades 114. Therefore, the control system can also be denominated a wind turbine load control system 150.

In order to perform a load control for at least one structural component of the wind turbine, the control system 150 comprises a fatigue sensing system 152 for generating reliable measurement values being indicative for the mechanical load acting on the at least one structural component. Further, the control system 150 comprises a load and conditioning system 154 for conditioning the generated measurement values. Further, the control system 150 comprises a strategy system 156 for selecting a load reduction measure for operating the wind turbine 100 in order to yield a reduced power production. Furthermore, the control system 150 comprises an executing system 158 for executing a selected load reduction measure.

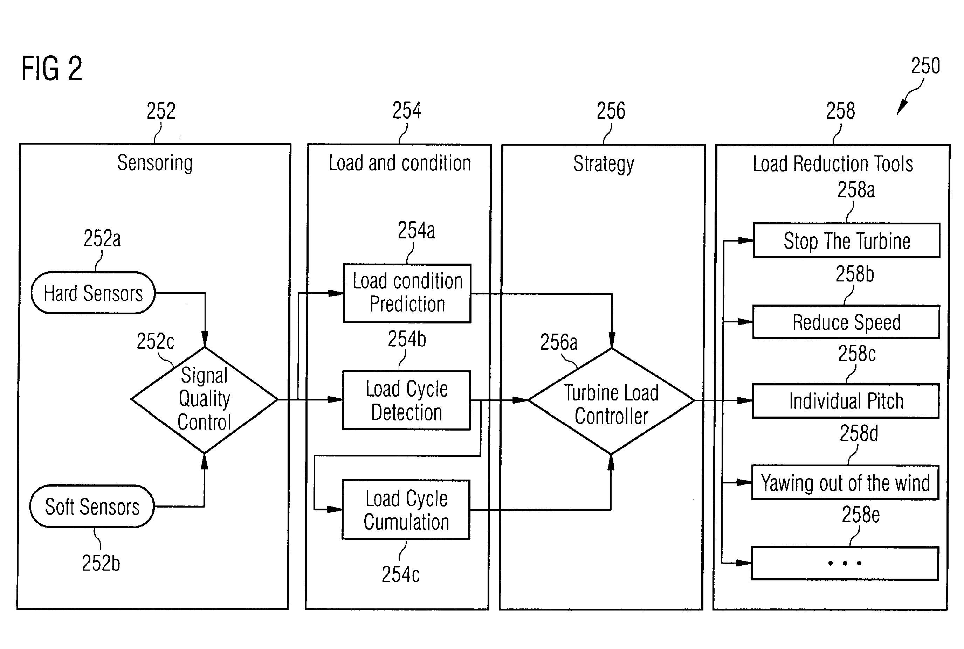

Figure 2 shows in accordance with an embodiment of the present invention a block diagram of a wind turbine load control system 250 for controlling a mechanical load reduction measure for at least one structural component of the wind turbine 100.

The wind turbine operation control starts with measuring mechanical loads, which are acting on a structural component of the wind turbine. As has already been mentioned above, according to the embodiment described here, the structural component is a rotor blade. However, the wind turbine load control system 250 can also be used for controlling a load reduction measure for other structural components such as for instance the nacelle 122 or the tower 120 of the respective load controlled wind turbine 100.

The control system 250 comprises (a) a fatigue sensing system 252 for generating reliable measurement values being indicative for the mechanical load acting on the at least one structural component, (b) a load and conditioning system 254 for conditioning the generated measurement values, (c) a strategy system 256 for selecting a load reduction measure and (d) an executing system 258 for executing a selected load reduction measure.

As can be seen from Figure 2, the fatigue sensing system 252 comprises hard sensors 252a such as for instance a force meter, a pressure gauge, a strain gauge (e.g. a tensometer), an acceleration sensor and/or a temperature sensor. Further, the mechanical load measurement comprises soft sensors 252b. The signal quality of the sensor signals provided from the hard sensors 252a and/or from the soft sensors 252b is checked with a signal quality control unit 252c. Thereby, measurement artifacts or apparent measuring errors can be filtered out.

The signal quality control unit 252c provides as an output signal a positively adjudged measurement signal being indicative for the current mechanical load acting on the respective structural component. The output signal is fed to the load and conditioning system 254.

The load and conditioning system 254 comprises a load condition prediction unit 254a, a load cycle detection unit 254b and a load cycle cumulation unit 254c. As can be seen from Figure 2, according to the embodiment described here, the output signal of the signal quality control unit 252c is specifically provided both to the load condition prediction unit 254a and to the load cycle detection unit 254b.

The load condition prediction unit 254a predicts the mechanical load condition of the respective structural component and feeds a corresponding signal to the strategy system 256, which in this document is also denominated as a selection system 256. According to the embodiment described here the strategy system or selection system 256 comprises a turbine load controller 256a, which is receiving the mentioned signal from the load condition prediction unit 254a.

For realizing the load condition prediction unit 254a reference is made to EP 1 988 284 A1, which is mentioned above in the section "Art Background".

The load cycle detection unit 254b detects and evaluates the load cycle which is currently acting on the respective structural component and feeds a corresponding signal both to the turbine load controller 256a and to the above mentioned load cycle cumulation unit 254c. An output signal of the load cycle cumulation unit 254c, which is indicative for the accumulated fatigue life time consumption of the structural component is also fed to the turbine load controller 256a.

The load cycle cumulation unit 254c is adapted to perform an Online Cyclic Counting Rate (OCCR) method. The basic concept and various preferred embodiments of the OCCR method are described above in this document in the section "Summary of the Invention".

Based on the three output signals provided (a) by the load condition prediction unit 254a, (b) by the load cycle detection unit 254b and (c) by the load cycle cumulation unit 254c the turbine load controller 256a selects at least one measure for reducing the mechanical load acting on the respective structural component. A corresponding selection signal is generated by the turbine load controller 256a and is provided to the executing system 258. The executing system 258 is capable of triggering different load reduction measures or load reduction tools, which are described in the following paragraph.

A very aggressive load reduction tool is simply to stop the operation of the wind turbine. This is indicated with reference numeral 258a. Further load reduction tools or load reduction measures are reducing the rotor speed (reference numeral 258b), adapting the individual blade pitch angle (reference numeral 258c) and/or adjusting the yawing angle (reference numeral 258d). It is mentioned that the given list of load reduction tools is not exclusive. In order to reduce the current mechanical load acting on the structural component a suitable adaptation of any arbitrary operational parameter of the wind turbine may be carried out, wherein the parameter adaptation results in a change of the current power generation of the wind turbine. Therefore, reference numeral 258e indicates other not explicitly described load reduction tools.

The described operation of the wind turbine load control system may provide the following advantages:
(A) The measurement signal provided by Hard Sensor(s) and the Soft Sensor(s) is quality controlled with redundancy before it is used by the load and conditioning system 254, specifically by the load condition prediction unit 254a, load cycle detection unit 254b and by the load cycle cumulation unit 254c.
(B) The Turbine load control strategy is based on 3 different group of signals: (i) Load prediction, which can used to avoid future high loads, (ii) Load cycle detection, which can reduce the load in the same time they are building up (online) and (iii) Load Cycle Cumulation, which can monitor the life time consumption for the structural component.
(B) An appropriate load reduction tool can be selected in order to protect a high loaded structural component and in the same time optimize the power output. Alternatively, other parameters such as fatigue life time and/or the amount of generated power can be optimized.
(C) Furthermore, the described wind turbine load control system makes it possible to operate the wind turbine based on instantaneous load conditions. This is possible due to the use of the above described OCCR method where fatigue load is continuously calculated. It is hereby possible to control the turbine and to reduce the load in the same time load and/or fatigue is building up.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method for selecting a load reduction measure (258a, 258b, 258c, 258d, 258e) for operating a power generating machine (100), in particular a wind turbine (100), the method comprising
● determining a mechanical load which is acting on a structural component (114, 120, 122) of the power generating machine (100), and
● selecting the load reduction measure (258a, 258b, 258c, 258d, 258e) from at least two predetermined load reduction measures based on the determined mechanical load.

2. The method as set forth in the preceding claim, wherein for selecting the load reduction measure in addition to the determined mechanical load acting on the structural component (114, 120, 122) at least one operational parameter of the power generating machine (100) is taken into account.

3. The method as set forth in any one of the preceding claims, wherein
determining the mechanical load acting on the structural component (114, 120, 122) comprises
determining a change of the mechanical load which is acting on the structural component (114, 120, 122).

4. The method as set forth in any one of the preceding claims, further comprising
● selecting a further load reduction measure (258a, 258b, 258c, 258d, 258e) from at least three predetermined load reduction measures (258a, 258b, 258c, 258d, 258e) based on the determined mechanical load.

5. The method as set forth in any one of the preceding claims, wherein
- the mechanical load which is acting on the structural component (114, 120, 122) is determined by a hard sensor (252a) and/or
- the mechanical load which is acting on the structural component (114, 120, 122) is determined by a soft sensor (252b).

6. The method as set forth in any one of the preceding claims, wherein
determining the mechanical load acting on the structural component (114, 120, 122) comprises
● checking a signal quality (252c) of a sensor output signal, which is indicative for the mechanical load acting on the structural component (114, 120, 122) and
● if the signal quality of the sensor output signal fulfills a predetermined signal quality requirement, using the sensor output signal for selecting the load reduction measure (258a, 258b, 258c, 258d, 258e).

7. The method as set forth in any one of the preceding claims, further comprising
● predicting a mechanical load condition (254a) of the structural component (114, 120, 122) based on the determined mechanical load acting on the structural component (114, 120, 122),
wherein
for selecting the load reduction measure (258a, 258b, 258c, 258d, 258e) the predicted mechanical load condition (254a) of the structural component (114, 120, 122) is taken into account.

8. The method as set forth in any one of the preceding claims, further comprising
● detecting a load cycle (254b) of the structural component (114, 120, 122) based on the determined mechanical load acting on the structural component (114, 120, 122),
wherein
for selecting the load reduction measure (258a, 258b, 258c, 258d, 258e) the detected load cycle (254b) of the structural component (114, 120, 122) is taken into account.

9. The method as set forth the preceding claims, further comprising
● detecting a load cycle cumulation (254c) of the structural component (114, 120, 122) based on the detected load cycle of the structural component (114, 120, 122),
wherein
for selecting the load reduction measure (258a, 258b, 258c, 258d, 258e) the detected load cycle cumulation (254c) of the structural component (114, 120, 122) is taken into account.

10. The method as set forth in any one of the preceding claims, wherein
the power generating machine is a wind turbine (100) and
the predetermined load reduction measures comprise at least one of the following measures:
- stopping the operation (258a) of the wind turbine (100) for a predetermined period of time,
- reducing the speed (258b) of the wind turbine (100),
- reducing the power being generated by the wind turbine,
- changing the blade pitch angle (258c) of at least one rotor blade (114) of the wind turbine (100),
- changing the yaw angle (258d) of a nacelle (122) of the wind turbine (100).

11. A machine load control system for selecting a load reduction measure (258a, 258b, 258c, 258d, 258e) for operating a power generating machine (100), in particular a wind turbine (100), the machine load control system (150, 250) comprising
● determining unit (252, 254) for determining a mechanical load which is acting on a structural component (114, 120, 122) of the power generating machine (100), and
● a selection unit (256) for selecting the load reduction measure (258a, 258b, 258c, 258d, 258e) from at least two predetermined load reduction measures based on the determined mechanical load.

12. A power generating machine, in particular a wind turbine (100), the power generating machine comprising
● a machine load control system (150, 250) as set forth in the preceding claim.

13. The power generating machine as set forth in the preceding claim, wherein
the structural component (114, 120, 122) is a force, a stress and/or a pressure receiving element of a wind turbine (100).

14. A computer program for controlling the operation of a power generating machine (100), in particular for controlling the operation of a wind turbine (100), the computer program, when being executed by a data processor, is adapted for controlling or for carrying out the method as set forth in any one of the claims 1 to 11.
